(19) **Europäisches Patentamt / European Patent Office / Office européen des brevets**

(11) **EP 1 587 220 B1**

(12) **EUROPEAN PATENT SPECIFICATION**

(45) Date of publication and mention of the grant of the patent:
**05.08.2009  Bulletin 2009/32**

(51) Int Cl.:
**H04B 1/707** (2006.01)    **H04B 7/08** (2006.01)

(21) Application number: **05251767.9**

(22) Date of filing: **23.03.2005**

(54) **An intelligent antenna receiver architecture**

Eine intelligente Antennenempfängerarchitektur

Architecture de récepteur d'antennes intelligentes

(84) Designated Contracting States:
**DE FR GB**

(30) Priority: **16.04.2004  US 825851**

(43) Date of publication of application:
**19.10.2005  Bulletin 2005/42**

(73) Proprietor: **LUCENT TECHNOLOGIES INC.**
**Murray Hill NJ 07974-0636 (US)**

(72) Inventors:
• **Ye, Henry H.**
  **Ledgewood, NJ 07852 (US)**
• **Buehrer, Michael R.**
  **Christianburg, VA 24073 (US)**
• **Soni, Robert A.**
  **Morris Plains, NJ 07950 (US)**
• **Dominique, Francis**
  **Rockaway, NJ 07866 (US)**

(74) Representative: **Sarup, David Alexander et al**
  **Alcatel-Lucent Telecom Limited**
  **Unit 18, Core 3, Workzone**
  **Innova Business Park**
  **Electric Avenue**
  **Enfield**
  **EN3 7XU (GB)**

(56) References cited:
  US-A- 5 812 090        US-A1- 2003 035 468
  US-B1- 6 608 858

**Description**

## BACKGROUND OF THE INVENTION

### 1. FIELD OF THE INVENTION

This invention relates generally to a wireless communication system, and, more particularly, to an intelligent antenna receiver architecture in a wireless communication system.

### 2. DESCRIPTION OF THE RELATED ART

A wireless communication system, such as a cellular communication system, typically includes at least one base station that may maintain one or more concurrent communication channels with one or more mobile units. The mobile units may include cellular telephones, global positioning system receivers, personal data assistants, laptop computers, desktop computers, handheld scanners, and the like. The base station may include one or more antennas for transmitting and/or receiving signals from the mobile units. For example, the base station may include four antennas for transmitting signals to one or more mobile units (on a forward link) and/or receiving signals from one or more mobile units (on a reverse link). To receive signals from the mobile units on the reverse link, the base station includes a receiver that searches the received signals for images of data symbols transmitted by the mobile units. The receiver may also track, demodulate, and decode the images, as well as performing other operations.

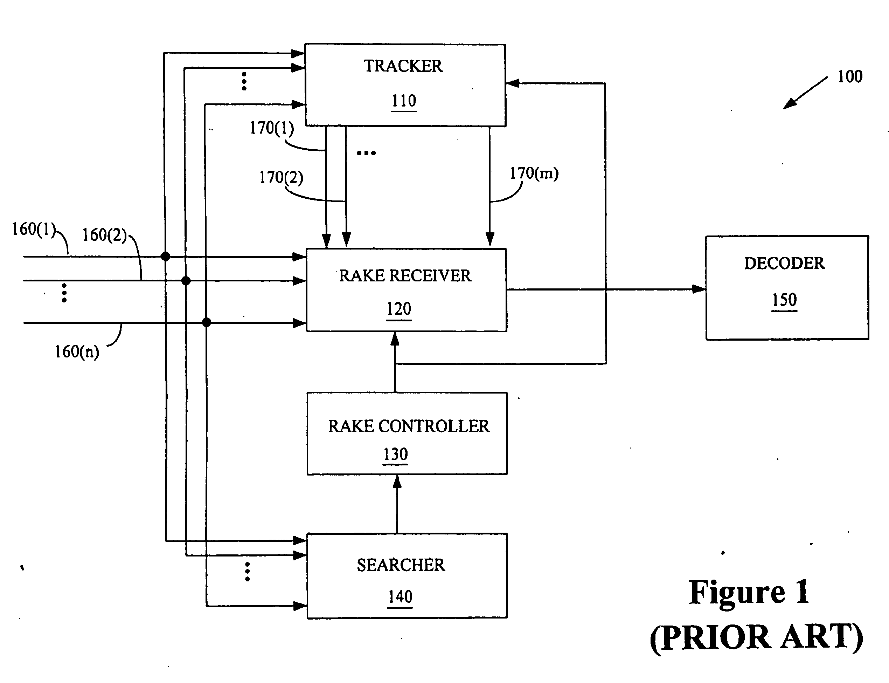

Figure 1 conceptually illustrates an exemplary embodiment of a conventional receiver 100, such as a code division multiple access (CDMA) receiver, which may be used in a cellular telecommunications system. The receiver 100 includes a tracker 110, a rake receiver 120, a rake controller 130, a searcher 140, and a decoder 150. Persons of ordinary skill in the art should appreciate that while the tracker 110, the rake receiver 120, the rake controller 130, the searcher 140, and the decoder 150 are depicted in Figure 1 as functionally independent blocks, this does not necessarily imply that these elements use separate hardware engines. For example, in some embodiments, the tracker 110, the searcher 140, and the rake receiver 120 may timeshare one or more processing engines due to the similarities of their de-spreading operations.

One or more complex baseband antenna signals 160(1-n) may be provided to the tracker 110, the rake receiver 120, and the searcher 140. In operation, the searcher 140 continually searches the complex baseband antenna signals 160(1-n) for potential new images and provides the results of the search to the rake controller 130, which may assign each image detected by the searcher 140 to a finger of the rake receiver 120. The tracker 110 may also track one or more delays associated with the one or more fingers of the rake receiver 120. For example, the rake receiver 120 may include $m$ fingers and the tracker 110 may estimate the propagation delay of the images assigned to each of the fingers.

The tracker 110 may provide propagation delay estimates 170(1-m) associated with each finger to the rake receiver 120 so that the rake receiver 120 may accurately correlate the images with an appropriate de-spreading function, such as a PN Offset, a Walsh code, and the like. The rake receiver 120 may de-modulate the complex baseband antenna signals 160(1-n) using the one or more fingers assigned by the rake controller 130, as well as other information including the appropriate de-spreading function, the propagation delay estimates 170(1-m), and the like. The rake receiver 120 may also combine the images of a single data symbol and output the resulting soft symbol to the decoder 150 for channel decoding, such as error correction decoding.

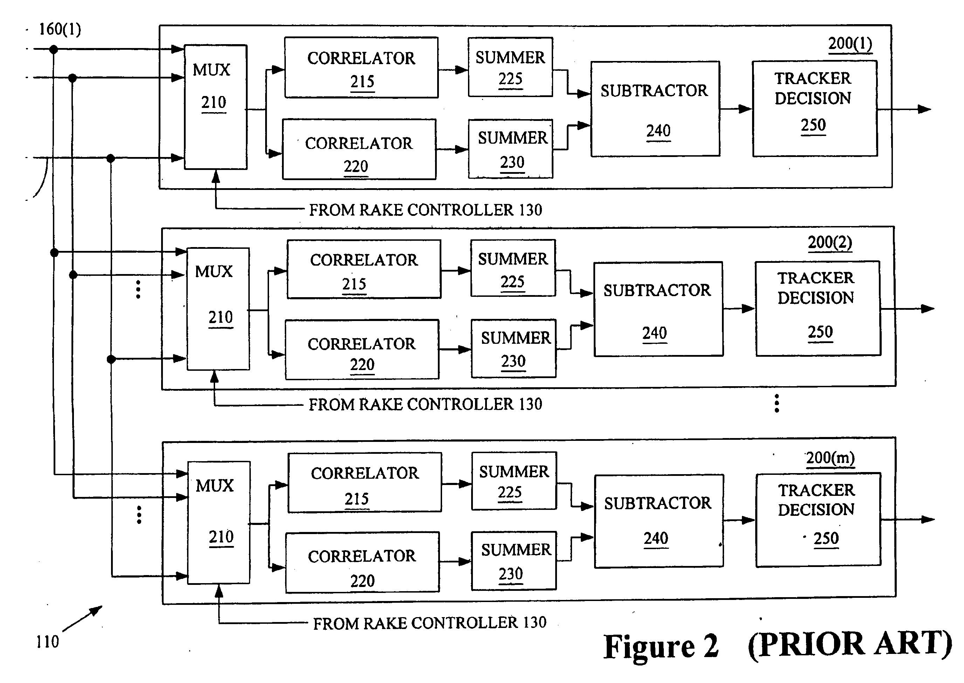

Figure 2 conceptually illustrates an exemplary embodiment of the conventional tracker 110. The tracker 110 includes a plurality of tracker engines 200(1-m) that are used to independently track the propagation delays associated with each of the $m$ images that are assigned to the $m$ fingers of the rake receiver 120. Although each tracker engine 200(1-m) is associated with one of the $m$ fingers, the present invention is not limited to embodiments of _ the tracker 110 that include $m$ tracker engines 200(1-m). In alternative embodiments, or fewer tracker engines 200(1-m) may be used. For example, a single tracker engine 200(1-m) may be used to track the propagation delays of the images associated with each of the fingers on a time-shared basis.

Each tracker engine 200(1-m) includes a multiplexer 210, correlators 215 and 220, summers 225 and 230, a subtractor 240, and a tracker decision block 250. The multiplexer 210 may receive a control signal from the rake controller 130 and use the control signal to select one of the complex baseband antenna signals 160(1-n). The correlators 215, 220 may correlate the selected one of the complex baseband antenna signals 160(1-n) by aligning it with a de-spreading code a small time increment ahead (for the correlator 215) and behind (for the correlator 220) of an estimated propagation delay of the image. Correlated output signals, $e$ and $l$, from the correlators 215, 220 are then summed in the summers 225, 230, respectively, to determine the energies, $\|e\|^2$ and $\|l\|^2$, which are provided to the subtractor 240.

The subtractor 240 determines a difference in the energies of the correlated output signals from the correlators 215, 220. The resulting energy difference, $\|e\|^2 - \|l\|^2$ for each finger is generated and fed to the tracker decision block 250, which may used the energy difference to fine tune the estimated propagation delay of the finger. For example, if the energy difference is small, the tracker decision block 250 may determine that the estimated propagation delay is approximately centered between the small time increment ahead (for the correlators 215) and behind (for the correlators 220) of the estimated delay of the finger, and that the estimated delay is approximately equal to the actual propagation delay of the finger. However, if the energy difference is relatively large, the tracker decision block 250 may use the magnitude of the energy difference and/or the sign of the energy difference to modify the estimated propagation delay of the finger.

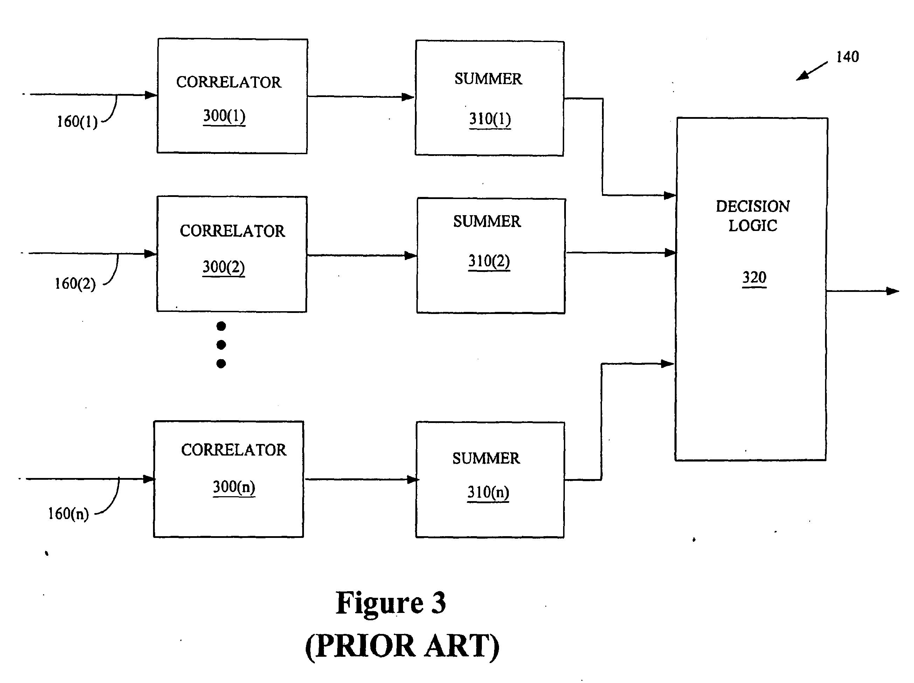

Figure 3 conceptually illustrates an exemplary embodiment of the conventional searcher 140. The complex baseband antenna signals 160(1-n) are independently provided to correlators 300(1-n), which may independently determine a correlated signal for each antenna using each of a plurality of hypothetical delays. Summers 310(1-n) determine the energy of each correlated signal for each hypothetical delay and provide the energies to a decision logic 320, which determines, in coordination with the rake controller 130, whether one or more images at one or more of the hypothetical delays should be provided to one or more fingers in the rake receiver 120. The decision logic 320 may also determine, in coordination with the rake controller 130, that an existing finger should be replaced with a new finger at the selected delay. The searcher 140 may repeat this process for a plurality of selected delays.

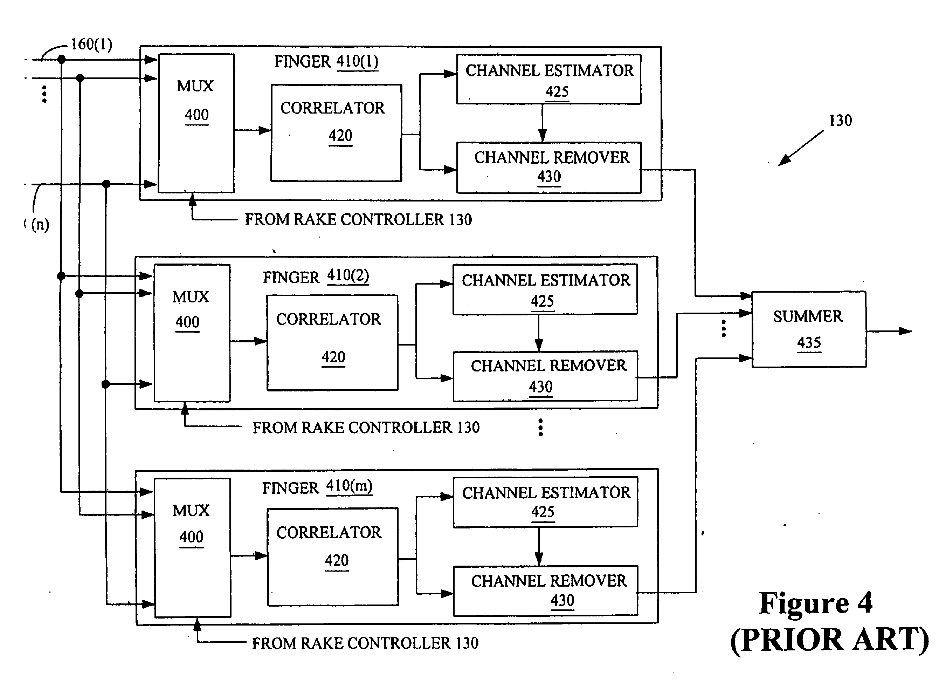

Figure 4 conceptually illustrates one exemplary embodiment of the conventional rake receiver 120 including one or more rake fingers 410(1-m). A multiplexer 400 in each rake finger 410(1-m) may be used to choose a complex baseband antenna signal 160(1-n) corresponding to the image assigned to the rake finger 410 (1-m) based on a control signal provided by the rake controller 130. The selected complex baseband antenna signal 160 may be provided to a correlator 420, which may form a correlated output signal and provide the correlated output signal to a channel estimator 425. The channel estimator 425 may determine a channel estimation of the image that is assigned to the rake finger 410(1-m) and provide the channel estimation $a$ to the channel remover 430, which may use the channel estimation to compensate for channel-induced amplitude and/or phase distortion of a data portion of the image. The channel remover 430 may then provide a compensated data signal to a summer 435, which may sum the compensated data signals from the rake fingers 410(1-m) to form a combined data output, or soft symbols, corresponding to the complex baseband antenna signals 160(1-n) received by the n antennas. In one embodiment, the correlators 420, the channel estimators 425, and the channel removers 430 for each of the rake fingers 410(1-m) may be time-shared by one or more sets of hardware.

In addition to a primary ray, a signal transmitted by the mobile unit may produce one or more temporal echoes with one or more associated propagation time delays. When the base station includes more than one receiving antenna, each of the echoes, or rays, is received by each of the antennas and therefore produces a plurality of images corresponding to the plurality of receiving antenna. For example, if the transmitted signal includes $k$ rays and is received by a base station having n antennas, the base station will receive a total of $k \times n$ images corresponding to the transmitted signal. As discussed above, the conventional receiver 100 treats each received image independently and assigns each received image to a separate rake finger. Consequently, each finger is tracked independently using separate trackers, which independently estimate the propagation delay of each image.

Chevalier and Pipon (U.S. Patent No. 5,812,090) describe techniques for synchronizing a modem to a radiofrequency digital signal transmitter. The technique includes determining correlations between signals received from multiple sensors and then using these correlations to determine synchronization criteria.

The present invention is directed to addressing the effects of one or more of the problems set forth above.

## SUMMARY OF THE INVENTION

A method and apparatus according to the present invention are set out in the independent claims, to which the reader is now referred. Preferred features are laid out in the dependent claims.

In one embodiment of the instant invention, a method is provided for an intelligent antenna receiver architecture. The method includes receiving a first plurality of signals corresponding to a plurality of antennas, determining at least one value indicative of a non-random portion of the first plurality of signals, and modifying the first plurality of signals based upon the at least one value indicative of the non-random portion of the first plurality of signals to form a second plurality of signals.

In another embodiment of the present invention, an apparatus is provided for an intelligent antenna receiver architecture. The apparatus includes a signal transformer for receiving a first plurality of signals corresponding to a plurality of antennas, determining at least one value indicative of a non-random portion of the first plurality of signals, and modifying the first plurality of signals based upon the at least one value indicative of the non-random portion of the first plurality of signals to form a second plurality of signals.

## BRIEF DESCRIPTION OF THE DRAWINGS

The invention may be understood by reference to the following description taken in conjunction with the accompanying drawings, in which like reference numerals identify like elements, and in which:

Figure 1 conceptually illustrates an exemplary embodiment of a prior art receiver;

Figure 2 conceptually illustrates an exemplary embodiment of a prior art tracker that may be used in the receiver shown in Figure 1;

Figure 3 conceptually illustrates an exemplary embodiment of a prior art searcher that may be used in the receiver shown in Figure 1;

Figure 4 conceptually illustrates one exemplary embodiment of a prior art rake receiver that may be used in the receiver shown in Figure 1;

Figure 5 conceptually illustrates an exemplary embodiment of a receiver, in accordance with one embodiment of the present invention;

Figure 6 conceptually illustrates an exemplary embodiment of a searcher that may be used in the receiver shown in Figure 5, in accordance with one embodiment of the present invention;

Figure 7 conceptually illustrates an exemplary embodiment of a tracker that may be used in the receiver shown in Figure 5, in accordance with one embodiment of the present invention; and

Figure 8 conceptually illustrates an exemplary embodiment of a group tracker that may be used in the tracker shown in Figure 7, in accordance with one embodiment of the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the scope of the invention as defined by the appended claims.

## DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

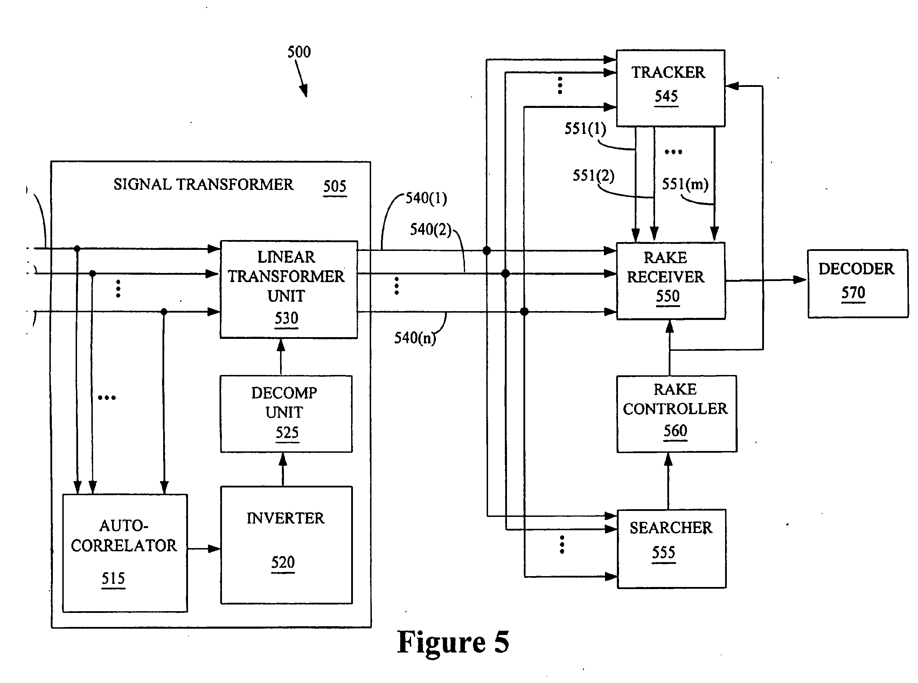

Figure 5 conceptually illustrates an exemplary embodiment of a receiver 500 including a signal transformer 505. The exemplary embodiment shown in Figure 5 will be described in the context of a cellular telecommunications system that uses a code division multiple access (CDMA) protocol. However, persons of ordinary skill in the art should appreciate that the present invention is not limited to the cellular telecommunications systems using a CDMA protocol. In alternative embodiments, the present invention may be implemented in any desirable wireless communication system using any desirable protocol including UMTS, IS-95, Wireless LAN, and the like.

The signal transformer 505 receives a plurality of complex baseband antenna signals 510(1-n), which may be provided to an autocorrelator 515. The autocorrelator 515 determines at least one value indicative of a non-random portion of the complex baseband antenna signals 510(1-n). In one embodiment, the complex baseband antenna signals 510(1-n) are represented as a complex column vector $X = (x(1), x(2), ..., x(n))$ that is provided to the autocorrelator 515, which may perform an autocorrelation of the complex column vector $X$ to generate an autocorrelation matrix $R_{xx}$. A signal indicative of the autocorrelation matrix may be provided to an inverter 520, which may use the provided signal to generate an inverted autocorrelation matrix $R^{-1}_{xx}$. The inverter 520 may provide a signal indicative of the inverted autocorrelation matrix to a decomposition unit 525, which may use the provided signal to decompose the inverted autocorrelation matrix and generate a decomposed matrix, $P$. In one embodiment, the decomposed matrix may be computed using the equation, $R^{-1}_{xx}=P^HP$.

In the illustrated embodiment, the plurality of complex baseband antenna signals 510(1-n) are provided to a linear transformer unit 530, which may also receive a signal indicative of the decompose matrix from the decomposition unit 525. The linear transformer unit 530 may use the plurality of complex baseband antenna signals 510(1-n) and the signal indicative of the decomposed matrix to transform the plurality of complex baseband antenna signals 510(1-n) to form a corresponding plurality of modified antenna signals 540(1-n). In one embodiment, the linear transformer unit 530 may modify the complex baseband antenna signals 510(1-n) by applying a linear transformation to the complex column vector, $X$, to form a second complex column vector, $Y=(y(1),y(2),..., y(n))$. For example, the linear transformer unit 530 may apply a linear transformation given by the equation $Y=PX$. The second complex column vector $Y$ may then be used to form the plurality of modified antenna signals 540(1-n).

By modifying the complex baseband antenna signals 510(1-n) to form the corresponding plurality of modified antenna signals 540(1-n), the present invention may reduce one or more effects of undesirable portions of the complex baseband antenna signals 510(1-n). For example, persons of ordinary skill in the art should appreciate that using the inverse of the autocorrelation matrix in the linear transformation may reduce a mean square error between the received signal and a known sequence (such as a pilot sequence). For another example, if one or more strong user signals, strong interferer, and the like are present in the complex baseband antenna signals 510(1-n), the autocorrelation matrix may include one or more large eigenvalues indicative of non-random portions of the complex baseband antenna signals 510(1-n). Consequently, when the inverted autocorrelation matrix is used to transform the complex baseband antenna signals 510(1-n) to form the corresponding plurality of modified antenna signals 540(1-n), the amplitude of the particularly strong user signal and/or strong interferer may be reduced approximately in proportion to the inverse of the corresponding one or more large eigenvalues.

The plurality of modified antenna signals 540 (1-n) may be provided to a tracker 545, a rake receiver 550, and a searcher 555. In one embodiment, the searcher 555 continually searches the plurality of modified antenna signals 540(1-n) for potential new images. However, persons of ordinary skill in the art should appreciate that the present invention is not limited to a searcher 555 that continually searches the plurality of modified antenna signals 540(1-n) for potential new images. In alternative embodiments, the searcher 555 may search the plurality of modified antenna signals 540(1-n) for potential new images periodically, at selected intervals, in response to a control signal, or at any other desired time.

The searcher 555 provides the results of the search to a rake controller 560, which may assign each image detected by the searcher 555 to a corresponding finger of the rake receiver 550. The tracker 545 may also independently track one or more delays associated with the assigned fingers of the rake receiver 550 and provide decision signals 551(1-m) to the rake receiver 550. In one embodiment, the decision signals 551(1-m) include one or more estimated propagation delays. For example, the rake receiver 550 may include $m$ fingers and the tracker 545 may estimate the propagation delay of the images assigned to each of the fingers. The rake receiver 550 may provide a signal, such as soft symbols, to the decoder 570.

However, in one alternative embodiment, the searcher 555 searches the plurality of modified antenna signals 540(1-n) for a plurality of images associated with a ray received by a plurality of antennas. The searcher 555 provides the results of the search to a rake controller 560, which may assign each plurality of images detected by the searcher 555 to a corresponding plurality of fingers of the rake receiver 550. Hereinafter, the plurality of fingers is referred to as a finger group. For example, a base station (not shown) may include $n$ antennas and the rake receiver 550 may include $m$ fingers, so that the rake receiver 550 may process $m/n$ finger groups. The tracker 545 may also track a propagation delay associated with the finger group. Although the delay associated with each finger in the finger group may not be precisely equal, e.g. one or more path lengths from the mobile unit to the plurality of antennae may not be equal, persons of ordinary skill in the art should appreciate that the difference between the delays associated with each finger may be considered as negligibly small in the context of the present invention.

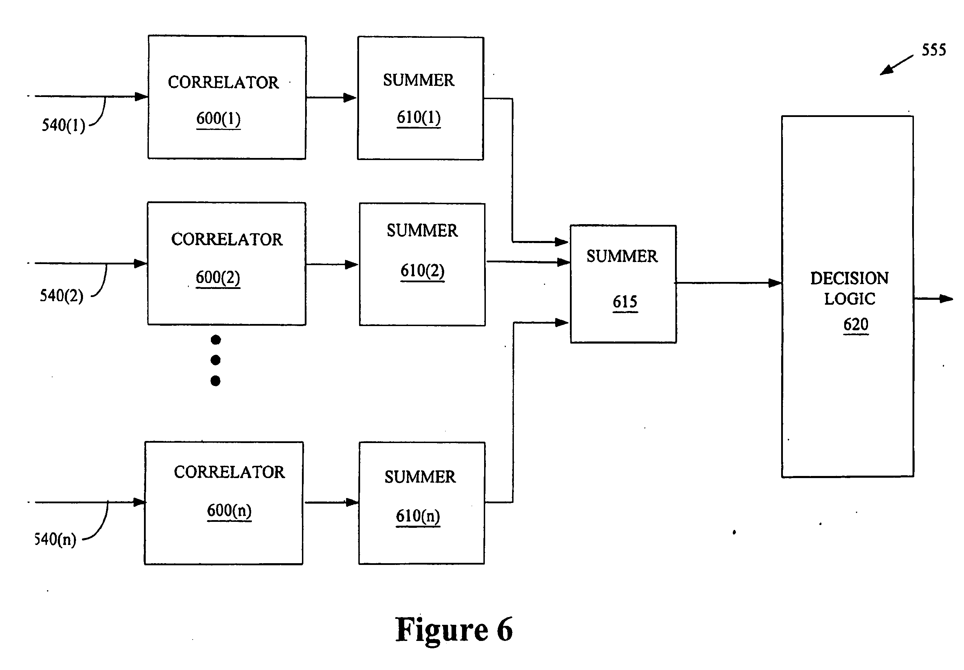

Figure 6 conceptually illustrates an exemplary embodiment of the searcher 555 that may be used to detect a plurality of images associated with a ray received by a plurality of antennas. In operation, the plurality of modified antenna signals 540(1-n) are provided to correlators 600(1-n), which may determine a correlated signal associated with one or more hypothetical delays for each antenna. Summers 610(1-n) receive the correlated signal and determine the energy of each correlated signal for a selected hypothetical delay. The summers 610(1-n) may then provide the energies to a summer 615, which sums up the energies corresponding to the plurality of antennas using the selected hypothetical delay. Accordingly, the summer 615 implements diversity combining of the correlated signals corresponding to each antenna. The summer 615 may provide the summed energy for one or more of the hypothetical delays to the decision logic 620, which determines whether the plurality of images at the selected delay should be provided to the fingers in a finger group in the rake receiver 550. The decision logic 620 may also determine that an existing finger group should be replaced with a new finger group at the selected delay. The searcher 555 may repeat this process for a plurality of selected delays to determine a best estimate of the delay associated with the finger group.

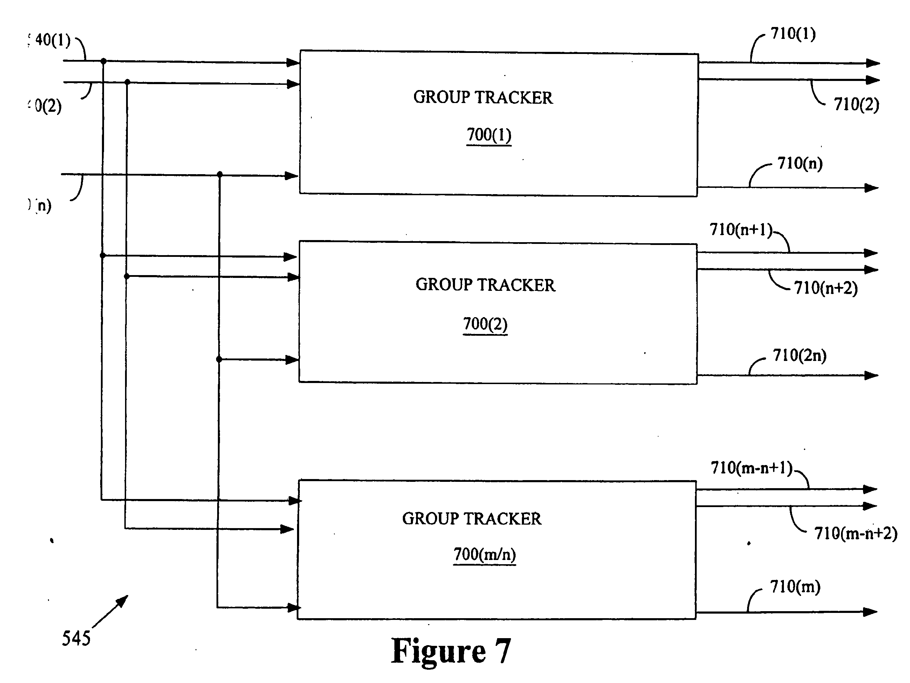

Figure 7 conceptually illustrates an exemplary embodiment of the tracker 545, which may be used to track a plurality of fingers in a finger group. The plurality of modified antenna signals 540(1-n) are provided to a plurality of group trackers 700(1-m/n) that may be used to track the plurality of fingers in the finger group. As discussed above, a base station (not shown) may include $n$ antennas and the rake receiver 550 may include $m$ fingers, so that the tracker 545 may include at least $m/n$ group trackers 700(1-m/n) to process $m/n$ finger groups.

Each of the group trackers 700(1-m/n) provides a portion of a plurality of decision signals 710(1-m). For example, the group tracker 700(1) provides the decision signals 700(1-n). In the illustrated embodiment, the signals 700(1-n) may communicate the estimated propagation delay associated with the n fingers in the finger group. By providing n signals, 700(1-n), the interface between the group trackers 700(1-m/n) and the rake receiver 550 may not need to be modified. However, the present invention is not so limited. In alternative embodiments, the group trackers 700(1-m/n) may provide more or fewer decision signals. For example, the group tracker 700(1) may provide a single decision signal 700(1). As indicated in Figure 7, each of the group trackers 700(1-m/n) may track the finger groups independently.

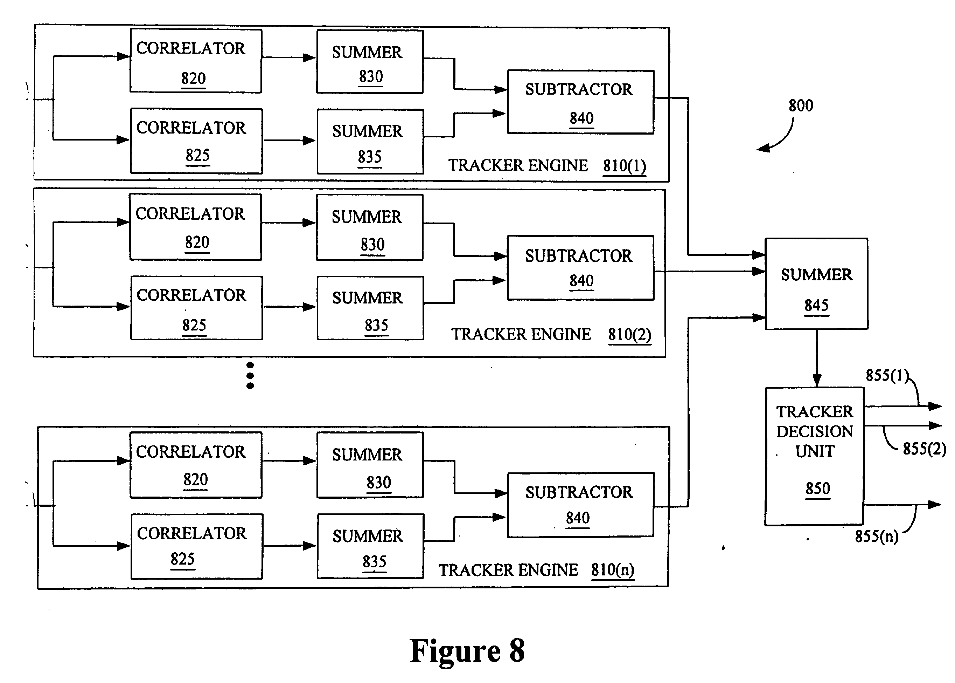

Figure 8 conceptually illustrates an exemplary embodiment of a group tracker 800. The group tracker 800 includes a plurality of tracker engines 810(1-n) that are used to calculate the metrics for each of the n images in the finger group associated with the same propagation delay for the finger group. Although each tracker engine 810(1-n) is associated with one of the finger groups, the present invention is not limited to embodiments of the group tracker 800 that include n tracker engines 810(1-n). In alternative embodiments, more or fewer tracker engines 810(1-n) may be used. For example, a single tracker engine 810(1-n) may be used to track the propagation delays associated with each of the finger groups on a time-shared basis.

Each tracker engine 810(1-n) includes correlators 820, 825, summers 830, 835, and a subtractor 840. In the illustrated embodiment, each of the plurality of modified antenna signals 540(1-n) are provided to the correlators 820, 825 in the corresponding tracker engine 810(1-n). The correlators 820, 825 may correlate the appropriate one of the plurality of modified antenna signals 540(1-n) by aligning it with a de-spreading code a small time increment ahead (for the correlator 820) and behind (for the correlator 825) of an estimated delay of the image. For example, the correlators 820, 825 may align one of the plurality of modified antenna signals 540(1-n) with a PN Offset, a Walsh code, and the like. Correlated output signals, $e(k)$ and $l(k)$, from the correlators 820, 825 of tracker engine 810($k$) are then summed in the summers 830, 835, respectively, to determine the "early" and "late" energies associated with the modified antenna signals 540(1-n), $\|e(k)\|^2$ and $\|l(k)\|^2$, respectively, which are provided to the subtractor 840 of tracker engine 840($k$).

The subtractor 840 determines a difference in the early and late energies of the correlated output signals from the correlators 820, 825. The resulting energy difference, $\|e(k)\|^2 - \|l(k)\|^2$, is generated by each tracker engine 810(1-n) and provided to a summer 845, which sums the energy differences to form an energy difference metric $\sum_{i=1}^{n}\left(\|e(i)\|^2 - \|l(i)\|^2\right)$. The energy difference metric is then fed to a tracker decision unit 850, which may use the energy difference metric to make a joint estimate of the propagation delay of the finger group, which may then be provided as a portion of decision signals 855(1-n). The estimated propagation delay of the finger group may then be applied to each finger in the finger group.

The energy difference metric may also be used to fine tune the estimated propagation delay of the finger group. For example, if the energy difference is small, the tracker decision unit 850 may determine that the estimated propagation delay is approximately centered between the small time increment ahead (for the correlators 820) and behind (for the correlators 825) of the estimated delay of the finger, and that the estimated delay is approximately equal to the actual application delay of the finger group. However, if the energy difference is relatively large, the tracker decision unit 850 may use the magnitude of the energy difference metric and/or the sign of the energy difference metric to modify the estimated propagation delay of the finger group.

The efficient intelligent antenna receiver architecture described above highly decouples the intelligent antenna functionality from the elements of a conventional receiver and simplifies the implementation greatly relative to previous implementations of intelligent antennas. Persons of ordinary skill in the art having benefit of the present disclosure should also appreciate that the aforementioned architecture may also result in soft symbols which minimize the mean square error between the received signal and a signal of interest. The proposed architecture thus may also provide improved diversity combining, aperture gain, interference cancellation, and other benefits. These benefits may be provided to demodulation and tracking/searching devices without necessarily making changes to the Rake receiver or the tracking/searching devices. However, implementing the finger groups as described above, may further improve the efficiency of the aforementioned intelligent antenna architecture.

The efficient intelligent receiver architecture described herein also reduces the changes to a conventional Rake architecture that does not implement an intelligent antenna, while still achieving the performance gain of intelligent antenna processing algorithm that may be applied to a reverse link. For example, in one of the aforementioned embodiments of the present invention, four functional blocks may be added in front of a conventional Rake receiver to generate a P matrix and to perform a linear transformation on the raw antenna data using the P matrix. The output signals may then be fed to the conventional Rake receiver with only minor changes to a Rake controller block, a tracker block, a searcher block, as discussed above.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below.

Accordingly, the protection sought herein is as set forth in the claims below.

## Claims

1. A method, comprising:

   receiving a first plurality of signals corresponding to a plurality of antennas;
   determining at least one value indicative of a non-random portion of the first plurality of signals, wherein determining the at least one value indicative of the non-random portion of the first plurality of signals comprises generating an autocorrelation matrix based upon the first plurality of signals; and
   modifying the first plurality of signals based upon the at least one value indicative of the non-random portion of the first plurality of signals to form a second plurality of signals,

wherein modifying the first plurality of signals comprises:

inverting the autocorrelation matrix;
decomposing the inverted autocorrelation matrix; and
applying a linear transformation to the first plurality of signals based upon the decomposed inverted autocorrelation matrix.

2. The method of claim 1, wherein the first plurality of signals comprises a first plurality of images associated with a first ray corresponding to a first transmitter, and comprising detecting the first plurality of images using the second plurality of signals.

3. The method of claim 2, wherein detecting the first plurality of images using the second plurality of signals comprises:

summing the second plurality of signals; and
searching the summed second plurality of signals for the first plurality of images;
assigning the first plurality of images to a first plurality of fingers;
processing one or more signals associated with the first plurality of fingers as a first finger group assuming that propagation delay estimates associated with the first plurality of fingers are equal.

4. The method of claim 3, wherein processing the first plurality of fingers as the first finger group comprises:

summing the one or more signals associated with the first plurality of fingers; and
tracking the summed one or more signals associated with the first plurality of fingers.

5. An apparatus, comprising:

a signal transformer configured to:

receive a first plurality of signals corresponding to a plurality of antennas;
determine at least one value indicative of a non-random portion of the first plurality of signals; and
modify the first plurality of signals based upon the at least one value indicative of the non-random portion of the first plurality of signals to form a second plurality of signals,

wherein the signal transformer comprises:

an autocorrelator configured to generate an autocorrelation matrix based upon the first plurality of signals;
an inverter configured to invert the autocorrelation matrix;
a decomposition unit configured to decomposed the inverted autocorrelation matrix; and
a linear transformation unit configured to apply a linear transformation to the first plurality of signals based upon the decomposed inverted autocorrelation matrix;
further comprising at least one of a tracker, a receiver, a receiver controller, and a searcher, and wherein the signal transformer is configured to provide the second plurality of signals to at least one of the tracker, the receiver, and the searcher, and wherein the searcher is configured to sum the second plurality of signals and searching the summed second plurality of signals for a first plurality of images, and wherein the receiver controller is configured to assign the first plurality of images to a first plurality of fingers, and wherein the tracker is configured to sum one or more signals associated with the first plurality of fingers and track the summed one or more signals associated with the first plurality of fingers.

**Patentansprüche**

1. Verfahren, umfassend:

Empfangen einer ersten Vielzahl von Signalen, welche einer Vielzahl von Antennen entspricht;
Bestimmen von mindestens einem Wert, welcher einen Nicht-Zufallsabschnitt der ersten Vielzahl von Signalen anzeigt, wobei das Bestimmen des mindestens einen Wertes, welcher einen Nicht-Zufallsabschnitt der ersten Vielzahl von Signalen anzeigt, das Erzeugen einer Autokorrelationsmatrix auf der Basis der ersten Vielzahl von Signalen umfasst; und
Ändern der ersten Vielzahl von Signalen auf der Basis des mindestens einen Wertes, welcher den Nicht-Zufallsabschnitt der ersten Vielzahl von Signalen anzeigt, um eine zweite Vielzahl von Signalen zu bilden, wobei das Ändern der ersten Vielzahl von Signalen umfasst:

Invertieren der Autokorrelationsmatrix;
Zerlegen der inversen Autokorrelationsmatrix; und
Anwenden einer linearen Transformation auf die erste Vielzahl von Signalen auf der Basis der zerlegten inversen Autokorrelationsmatrix.

**2.** Das Verfahren nach Anspruch 1, wobei die erste Vielzahl von Signalen eine erste Vielzahl von Bildern, welche einem ersten Strahl, der einem ersten Sender entspricht, zugeordnet sind, enthält, wobei das Verfahren das Erkennen der ersten Vielzahl von Bildern unter Verwendung der zweiten Vielzahl von Signalen umfasst.

**3.** Das Verfahren nach Anspruch 2, wobei das Erkennen der ersten Vielzahl von Bildern unter Verwendung der zweiten Vielzahl von Signalen umfasst:

Summieren der zweiten Vielzahl von Signalen; und
Suchen der summierten zweiten Vielzahl von Signalen für die erste Vielzahl von Bildern;
Zuordnen der ersten Vielzahl von Bildern zu einer ersten Vielzahl von Fingern;
Verarbeiten von einem oder mehreren Signalen, welche der ersten Vielzahl von Fingern zugeordnet sind, als eine erste Fingergruppe in der Annahme, dass die der ersten Vielzahl von Fingern zugeordneten Laufzeitverzögerungsschätzungen gleichwertig sind.

**4.** Das Verfahren nach Anspruch 3, wobei das Verarbeiten der ersten Vielzahl von Fingern als die erste Fingergruppe umfasst:

Summieren der ersten oder mehreren Signale, welche der ersten Vielzahl von Fingern zugeordnet sind; und
Verfolgen der summierten ersten oder mehreren Signale, welche der ersten Vielzahl von Fingern zugeordnet sind.

**5.** Vorrichtung, umfassend:

Einen Signalumsetzer, dafür konfiguriert, um:

Eine erste Vielzahl von Signalen, welche einer Vielzahl von Antennen entspricht, zu empfangen;
mindestens einen Wert, welcher einen Nicht-Zufallsabschnitt der ersten Vielzahl von Signalen anzeigt, zu bestimmen; und
die erste Vielzahl von Signalen auf der Basis des ersten Wertes, welcher einen Nicht-Zufallsabschnitt der ersten Vielzahl von Signalen anzeigt, zu ändern, um eine zweite Vielzahl von Signalen zu bilden,

wobei der Signalumsetzer umfasst:

Einen Autokorrelator, dafür konfiguriert, um eine Autokorrelationsmatrix auf der Basis der ersten Vielzahl von Signalen zu erzeugen;
einen Inverter, dafür konfiguriert, um die Autokorrelationsmatrix zu invertieren;
eine Zerlegungseinheit, dafür konfiguriert, um die inverse Autokorrelationsmatrix zu zerlegen; und
eine lineare Transformationseinheit, dafür konfiguriert, um eine lineare Transformation auf die Vielzahl von Signalen auf der Basis der zerlegten inversen Autokorrelationsmatrix anzuwenden;

weiterhin umfassend mindestens entweder einen Tracker, einen Empfänger, einen Empfänger-Controller oder einen Sucher, und wobei der Signalumsetzer dafür konfiguriert ist, um die zweite Vielzahl von Signalen mindestens entweder an den Tracker, den Empfänger oder den Sucher bereitzustellen, und wobei der Sucher dafür konfiguriert ist, um die zweite Vielzahl von Signalen zu summieren und die summierte zweite Vielzahl von Signalen für eine erste Vielzahl von Bildern zu suchen, und wobei der Empfänger-Controller dafür konfiguriert ist, um die erste Vielzahl von Bildern einer ersten Vielzahl von Fingern zuzuordnen, und wobei der Tracker dafür konfiguriert ist, um ein oder mehrere Signale, welche der ersten Vielzahl von Fingern zugeordnet sind, zu summieren und das eine oder die mehreren summierten Signale, welche der ersten Vielzahl von Fingern zugeordnet sind, zu verfolgen.

**Revendications**

**1.** Procédé comprenant :

réception d'une première pluralité de signaux correspondant à une pluralité d'antennes ;
détermination d'au moins une valeur indiquant la partie non aléatoire de la première pluralité de signaux, dans lequel la détermination de la au moins une valeur indiquant la partie non aléatoire de la première pluralité de signaux comprend la génération d'une matrice d'autocorrélation sur la base de la première pluralité de signaux ; et
modification de la première pluralité de signaux sur la base de la au moins une valeur indiquant la partie non aléatoire de la première pluralité de signaux pour former une seconde pluralité de signaux, dans lequel la modification de la première pluralité de signaux comprend :
inversion de la matrice d'autocorrélation ;
décomposition de la matrice d'autocorrélation inversée ; et
application d'une transformation linéaire à la première pluralité de signaux sur la base de la matrice d'autocorrélation inversée décomposée.

**2.** Procédé selon la revendication 1, dans lequel la première pluralité de signaux comprend une première pluralité d'images associées à un premier rayon correspondant à un premier émetteur, et comprenant la détection de la première pluralité d'images à l'aide de la seconde pluralité de signaux.

**3.** Procédé selon la revendication 2, dans lequel la détection de la première pluralité d'images à l'aide de la seconde pluralité de signaux comprend :

somme de la seconde pluralité de signaux ; et recherche de la seconde pluralité de signaux sommés pour la première pluralité d'images ; assignation de la première pluralité d'images à une première pluralité de doigts ; traitement d'un ou plusieurs signaux associés à la première pluralité de doigts en tant que premier groupe de doigts en supposant que les estimations du retard de propagation associé à la première pluralité de doigts sont égales.

**4.** Procédé selon la revendication 3, dans lequel le traitement de la première pluralité de doigts en tant que premier groupe comprend :

somme d'un ou plusieurs signaux associés à la première pluralité de doigts ; et suivi des un ou plusieurs signaux sommés associés à la première pluralité de doigts.

**5.** Appareil comprenant :

un transformateur de signal configuré pour :

recevoir une première pluralité de signaux correspondant à une pluralité d'antennes ; déterminer au moins une valeur indiquant une partie non aléatoire de la première pluralité de signaux ; et modifier la première pluralité de signaux sur la base de la au moins une valeur indiquant la partie non aléatoire de la première pluralité de signaux pour former une seconde pluralité de signaux,

dans lequel le transformateur de signal comprend :

un autocorrélateur configuré pour générer une matrice d'autocorrélation sur la base de la première pluralité de signaux ; un inverseur configuré pour inverser la matrice d'autocorrélation ; une unité de décomposition configurée pour décomposer la matrice d'autocorrélation inversée ; et une unité de transformation linéaire configurée pour appliquer une transformation linéaire à la première pluralité de signaux sur la base de la matrice d'autocorrélation inversée décomposée ;

comprenant en outre au moins un dispositif de suivi, un récepteur, un contrôleur de réception et un dispositif de recherche, et dans lequel le transformateur de signal est configuré pour fournir la seconde pluralité de signaux à au moins l'un du dispositif de suivi, du récepteur et du dispositif de recherche, et dans lequel le dispositif de recherche est configuré pour sommer la seconde pluralité de signaux et rechercher dans la seconde pluralité de signaux sommés une première pluralité d'images, et dans lequel le contrôleur de réception est configuré pour assigner la première pluralité d'images à une première pluralité de doigts, et dans lequel le dispositif de suivi est configuré pour sommer un ou plusieurs signaux associés à la première pluralité de doigts et suivre les un ou plusieurs signaux sommés associés à la première pluralité de doigts.

TRACKER
110

170(1)

170(2)

170(m)

160(1)
160(2)

160(n)

RAKE RECEIVER
120

DECODER
150

RAKE CONTROLLER
130

SEARCHER
140

100

EP 1 587 220 B1

Figure 1
(PRIOR ART)

160(1)

**200(1)**

MUX 210 → CORRELATOR 215 → SUMMER 225 → SUBTRACTOR 240 → TRACKER DECISION 250

CORRELATOR 220 → SUMMER 230

FROM RAKE CONTROLLER 130

**200(2)**

MUX 210 → CORRELATOR 215 → SUMMER 225 → SUBTRACTOR 240 → TRACKER DECISION 250

CORRELATOR 220 → SUMMER 230

FROM RAKE CONTROLLER 130

**200(m)**

MUX 210 → CORRELATOR 215 → SUMMER 225 → SUBTRACTOR 240 → TRACKER DECISION 250

CORRELATOR 220 → SUMMER 230

FROM RAKE CONTROLLER 130

110

**Figure 2   (PRIOR ART)**

EP 1 587 220 B1

**Figure 3**
**(PRIOR ART)**

Figure 4
(PRIOR ART)

**Figure 5**

EP 1 587 220 B1

EP 1 587 220 B1

```
            CORRELATOR              SUMMER
540(1)        600(1)                610(1)


            CORRELATOR              SUMMER
540(2)        600(2)                610(2)                SUMMER        DECISION
                                                           615          LOGIC
              •                                                          620
              •
              •

            CORRELATOR              SUMMER
540(n)        600(n)                610(n)
```

555

**Figure 6**

Figure 7

**Figure 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5812090 A, Chevalier and Pipon